# EUROPEAN PATENT APPLICATION

(11) **EP 2 309 223 A1**
(43) Date of publication of application: **13.04.2011**
(21) Application number: 09794457.3
(22) Date of filing: 08.07.2009
(51) Int. Cl.: G01B 11/25

(54) **MEASURING APPARATUS**

(30) Priority: 09.07.2008 JP 2008178667
(71) Applicant: Nikon Corporation, Tokyo 100-8331 (JP)
(72) Inventor: USAMI Hitoshi, Tokyo 100-8331 (JP)
(74) Representative: HOFFMANN EITLE
(86) International application number: PCT/JP2009/062412
(87) International publication number: WO 2010/005013

(57) **Abstract**

The present invention relates to a measurement apparatus capable of improving measurement precision of a measurement object using measurement light without deteriorating the visibility of the measurement object. An observation illumination device 12 has: three types of light sources, i.e., a LED 51 which emits red single-color light, a LED 52 which emits green single-color light, and a LED 53 which emits blue single-color light. The three types of the light of red, green, and blue emitted from the LEDs 51 to 53 irradiates the measurement object 2 at the same time or in a short period of time, thereby becoming observation light, which is perceived by humans as illumination of white light, and irradiates the measurement object 2. The measurement light source 31 is a light source which emits measurement light used in measurement of the shape of the measurement object 2 and is composed of a light source which emits near-infrared single-color laser light having a wavelength different from that of the LED 51. Among the light that enters an optical filter 39 from the measurement object 2, the measurement light transmits therethrough, the observation light is cut off, and the light transmitted through the optical filter 39 forms an image on a light-receiving surface of an image pickup element 41. The present invention can be applied to, for example, a shape measurement apparatus.

## Description

### [Technical Field]

The present invention relates to a measurement apparatus, and particularly relates to a measurement apparatus which carries out measurement of a measurement object by using measurement light.

### [Background Art]

Conventionally, optical measurement apparatuses which measure the focal position, shape, etc. of a measurement object include the apparatuses which carry out measurement by using measurement light such as laser light other than the observation light for observing the measurement object by eyes. Moreover, optical measurement apparatuses which carry out measurement by using measurement light include the apparatuses which carry out measurement by using the signal obtained from the difference between the signal detected by a light-receiving element when the measurement light is lit and the signal detected by the light-receiving element when the measurement light is turned off in order to eliminate the influence of observation light (for example, see Patent Literature 1).

### [Citation List]

### [Patent Literature]

[Patent Literature 1] Japanese Patent Laid-Open No. H11-264928

### [Summary of Invention]

### [Technical Problem]

However, in the case of the invention described in Patent Literature 1, when the observation light is too bright compared with the measurement light, saturation of the light-receiving element and deterioration in the S/N ratio may occur, and measurement precision may be deteriorated.

On the other hand, when the observation light is turned off upon measurement of the measurement object in order to avoid that problems, it is difficult to observe the measurement object during measurement since it is too dark.

The present invention has been accomplished in view of the foregoing circumstances and improves the measurement precision of the measurement object using measurement light without deteriorating the visibility of the measurement object.

### [Solution to Problem]

A measurement apparatus of an aspect of the present invention is a measurement apparatus for detecting measurement light, which irradiates a measurement object, by a light-receiving sensor and carrying out measurement of the measurement object, the measurement apparatus having: a plurality of observation light sources for respectively emitting light having mutually different wavelength components and irradiating the measurement object with the respective light so as to generate observation light perceived as white light illuminating the measurement object, wherein an integrated spectrum obtained by integrating spectrum light emission characteristics of the light having the mutually different wavelengths includes, in a visible wavelength range, a weak wavelength range of a wavelength at which intensity of light is equal to or less than a predetermined threshold value; and a measurement light source for emitting the measurement light serving as single-color light having the wavelength included in the weak wavelength range.

In the aspect of the present invention, the light emitted from the plurality of observation light sources and having the mutually different wavelength components is synthesized and perceived as the white light, the observation light including the weak wavelength range of the wavelength at which the intensity of light is equal to or less than the predetermined threshold value in the visible wavelength range is generated, and the measurement light which is the single-color light having the wavelength included in the weak wavelength range is emitted from the measurement light source.

### [Advantageous Effects of Invention]

According to the present invention, the measurement precision of the measurement object using the measurement light can be improved without deteriorating the visibility of the measurement object.

### [Brief Description of Drawings]

[Figure 1] Figure 1 is a block diagram showing an embodiment of a measurement apparatus to which the present invention is applied.
[Figure 2] Figure 2 is a drawing for explaining the movement of light of the measurement apparatus of Figure 1.
[Figure 3] Figure 3 is a graph of color matching functions.
[Figure 4] Figure 4 is a drawing showing an embodiment of an optical apparatus using two types of measurement light having mutually different wavelengths.
[Figure 5] Figure 5 is a diagram showing light emission spectra of respective LEDs and selection examples of light emission spectrum of the measurement light in the case in which an observation illumination device is composed of the LEDs of blue, green, and red.

### [Description of Embodiments]

Hereinafter, an embodiment to which the present invention is applied will be explained with reference to drawings.

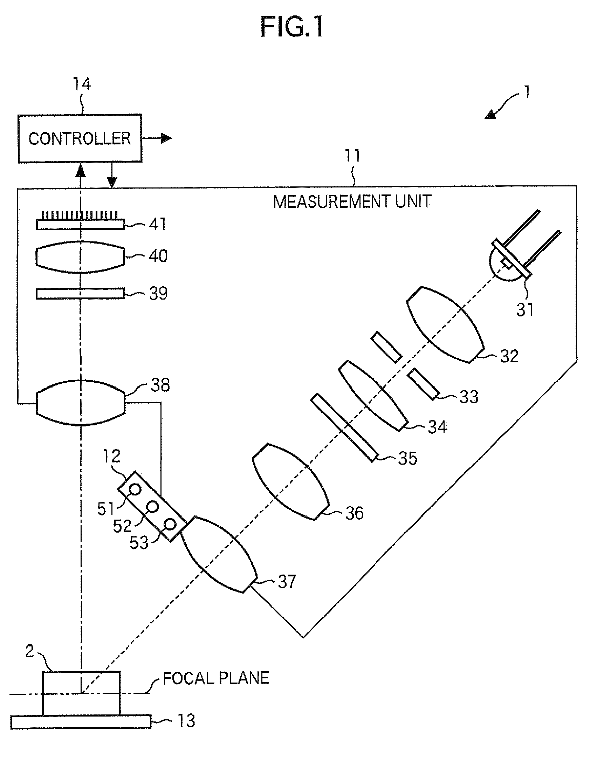

Figure 1 is a drawing showing an embodiment of a measurement apparatus to which the present invention is applied. The measurement apparatus 1 of Figure 1 is an optical measurement apparatus, which measures the shape of a measurement object 2 installed on a stage 13 by a shape-from-focus method.

In the measurement apparatus 1, two types of illumination devices, i.e., an observation illumination device 12 and a measurement light source 31 of a measurement unit 11 are provided.

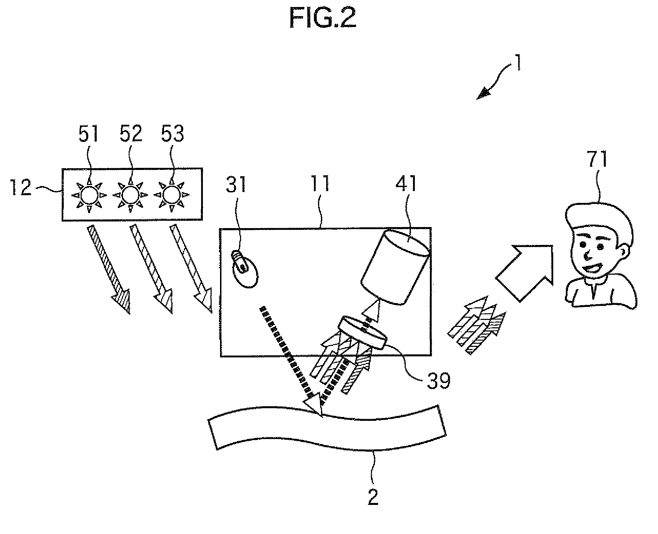

The observation illumination device 12 is an illumination device for irradiating the measurement object 2 with the observation light for observing the measurement object 2 with eyes. The observation illumination device 12 has three types of light sources, i.e., a LED (Light Emitting Diode) 51 which emits red single-color light having a predetermined center wavelength (for example, 613 nm) , a LED 52 which emits green single-color light having a predetermined center wavelength (for example, 520 nm), and a LED 53 which emits blue single-color light having a predetermined center wavelength (for example, 470 nm). The three types of the light of red, green, and blue emitted from the LEDs 51 to 53 irradiate the same object at the same time or in a short period of time, thereby becoming the observation light which is perceived as illumination of white light by humans and irradiating the measurement object 2. Then, as shown in Figure 2, a user 71 observes with eyes the measurement object 2 irradiated with the observation light. Hereinafter, each light synthesized for generating the observation light will be referred to as elemental light.

On the other hand, the measurement light source 31 is a light source which emits measurement light used in measurement of the shape of the measurement object 2. The measurement light source 31 is composed of a light source which emits near-infrared single-color laser light having a wavelength (for example, 630 nm) different from that of the LED 51.

The measurement light emitted from the measurement light source 31 enters a pupil diaphragm 33, which implements an appropriate focal depth, via a condenser lens 32. The measurement light passed through the pupil diaphragm 33 is condensed by a relay lens 34 and enters a liquid crystal element 35, which is disposed at a relative position conjugate to a focal plane S set on the measurement object 2.

The liquid crystal element 35 is provided in order to project a predetermined pattern onto the measurement object 2. The measurement light, which has passed through the liquid crystal element 35 and become pattern light, is caused to be parallel light flux by a relay lens 36 and enters an illumination objective lens 37. The illumination objective lens 37 condenses the light, which is from the liquid crystal element 35, onto the predetermined focal plane S and projects a predetermined pattern image onto the measurement object 2. In other words, the measurement light, which is enabled to project the pattern through the liquid crystal element 35, is caused to form the pattern image on the focal plane S of the measurement object 2 by the relay lens 36 and the illumination objective lens 37.

Then, in order to form the pattern image, which is projected onto the measurement object 2, on an image pickup element 41, the light reflected or scattered at the surface of the measurement object 2 is condensed by an image-formation objective lens 38. The light from the measurement object 2 condensed by the image-formation objective lens 38 also includes the reflected/scattered light of the observation light caused to irradiate the measurement object 2 by the observation illumination device 12. Therefore, the observation light and the pattern light (measurement light) condensed by the image-formation objective lens 38 enters an optical filter 39.

The optical filter 39 is a filter which allows transmission of the light having a predetermined wavelength in accordance with the spectrum of the measurement light and cuts off the light of the wavelength range emitted from the observation illumination device 12. Therefore, as shown in Figure 2, among the light of the wavelength ranges for which the image pickup element 41 has sensitivity that enters the optical filter 39 from the measurement object 2, the light of the wavelength range emitted by the observation illumination device 12 is reflected, and only the pattern light of the measurement light reaches the image pickup element 41. Then, the pattern light entered an image forming lens 40 (not shown in Figure 2) from the optical filter 39 enters the image pickup element 41. The image pickup element 41 is a sensor having a CCD (Charge Coupled Device) and picks up the image formed on a light receiving surface of the image pickup element 41.

A controller 14 obtains the images (hereinafter, referred to as observation images) of the measurement object 2 pattern-projected by the image pickup element 41 at measurement positions while changing the position of the stage 13 in the optical axis direction of the image-formation objective lens 38. The controller 14 calculates the positions of the pattern-projected measurement object 2, for example, based on the trigonometry from the images of the pattern and measures the shape of the measurement object 2. The controller 14 outputs the data expressing the measured shape of the measurement object 2 to outside.

In this manner, in the measurement apparatus 1, only the pattern light of the measurement light enters the image pickup element 41 even when the measurement object 2 is kept being irradiated with the observation light. Therefore, the dynamic range of the image pickup element 41 can be maximally utilized, the S/N ratio can be also improved, and the measurement precision of the shape of the measurement object 2 can be improved. Moreover, since the measurement object 2 is continuously irradiated with the observation light even during the measurement, the visibility of the measurement object 2 is not lowered, and the measurement object 2 can be observed in detail. Furthermore, since the observation light is the light that is perceived as white light, it is gentle to the eyes of users, and good workability is maintained.

The above described explanation shows the example of generating the observation light by synthesizing the elemental light of red, green, and blue. However, the observation light which is perceived as white light may be generated by a combination of the elemental light of other colors such as blue and yellow.

The elemental light is not necessarily single-color light. Specifically, the wavelength components of the elemental light are only required to be set so that, when the same object is illuminated with the elemental light, the observation light which has the intensity of the light in the wavelength of the measurement light (= the transmissive wavelength of the optical filter 39) equal to or less than a predetermined threshold value and is perceived as white light is obtained. In other words, the wavelength of the measurement light is only required to be selected from among the wavelengths at which the intensity of the observation light is equal to or less than the predetermined threshold value.

The threshold value is determined in accordance with, for example, the performance of the image-pickup element 41 or the measurement precision required for the measurement apparatus 1. In view of, for example, the performance of the optical filter 39, it is desirable that the intensity of the observation light be set lower than the threshold value also in the wavelengths near the wavelengths of the measurement light.

It is more desirable that the wavelength of the measurement light be set at the wavelength at which the spectral sensitivity of humans is weak. The reason therefor is that, even when the wavelength component at which the spectral sensitivity of humans is weak is removed from the observation light, human eyes are not affected almost at all, illumination of white light is easily sensed, while the observation light source has small cross talk with respect to the wavelength range of the measurement light and has lower influence on the measurement.

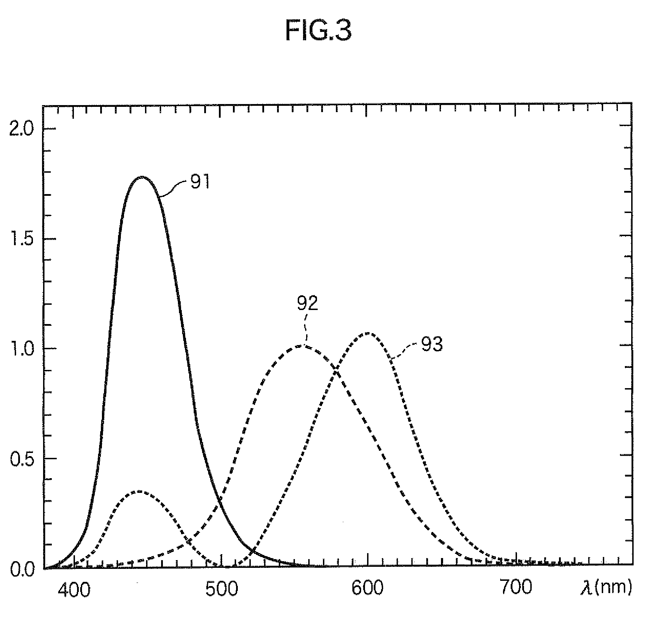

Figure 3 is a graph of color matching functions expressing the spectral sensitivity about human eyes. Lines 91 to 93 represent the absolute values of the color-receiving sensitivity (stimulus values) of three types of color receptors (color sensors), which have different light-receiving sensitivities and are conceived to be present in human eyes, with respect to the light of wavelengths. According to this graph of the color matching functions, in the visible wavelength range (for example, 380 nm to 780 nm) in which humans can perceive light, the wavelength of the measurement light is conceived to be most appropriate when set at the wavelength of, for example, equal to or less than 410 nm, a wavelength range in the vicinity of the boundary of the light-emitting regions of the blue LED and the green LED, a wavelength range in the vicinity of the boundary of the light-emitting regions of the green LED and the blue LED, or 660 nm or more.

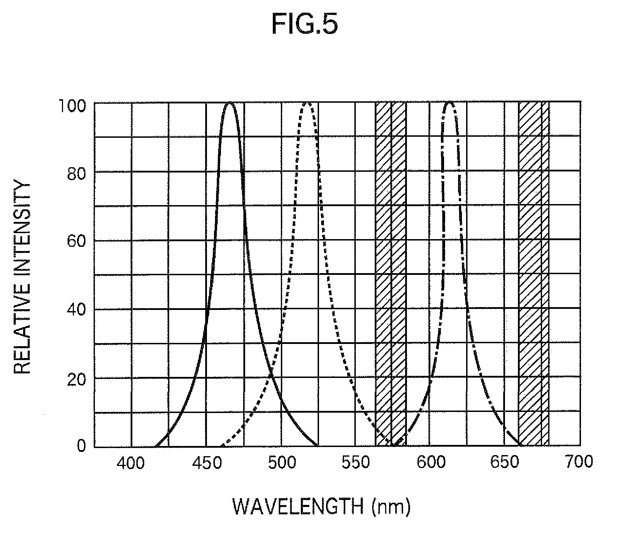

As an example thereof, Figure 5 shows the light emission spectrum of a blue LED, the light emission spectrum of a green LED, and the light emission spectrum of a red LED. When the LEDs of the three colors shown in Figure 5 are selected as the light sources of the observation illumination device 12, the hatched regions are desired as the wavelength ranges of the measurement light. Specifically, the wavelength range of the measurement light is preferred to be set in the wavelength range of 570 nm to 585 nm or in the wavelength range of 660 nm or more.

The wavelength of the measurement light may be set in the infrared range or the ultraviolet range other than the visible wavelength range. However, when the wavelength of the measurement light is set in the visible wavelength range so that the measurement light can be seen by the user, the user is enabled to actually check the measurement position by eyes.

When a light-receiving sensor which senses only the wavelength range of the measurement light is used instead of the image pickup element 41, the optical filter 39 can be omitted.

Furthermore, the explanation described above showed the example in which the observation light is used in order to observe the measurement object 2 directly with the eyes of the user. However, the observation light can be used for other purposes such as a purpose for picking up the image of the measurement object 2 and observing it.

The present invention can be applied to another optical apparatus which uses the observation light and the measurement light and detects the measurement light by a light-receiving sensor. For example, the present invention can be applied to a measurement apparatus which measures other elements (for example, focal length) other than the shape of the measurement object 2 by using the measurement light or can be applied to a microscope which has illumination for observation and a measurement light source for autofocus.

The present invention can be applied not only to the optical apparatus which uses the measurement light by causing the measurement light to be reflected by the measurement object, but also to an optical apparatus which uses the measurement light by causing the measurement light to transmit through the measurement object.

Furthermore, in the embodiment of the present invention, the relations between the observation light, the measurement light, and the optical axis of the incident light which enters the light-receiving sensor are not particularly limited. For example, the observation light and the measurement light may be emitted from the positions approximately same as the light-receiving sensor toward the measurement object, and the reflected light from the measurement object may be configured to enter the light-receiving sensor via the optical filter.

Moreover, in the embodiment of the present invention, the observation light source, the measurement light source, and the light-receiving sensor are not necessarily required to be separately provided; and, in accordance with needs, two or more of the observation light source, the measurement light source, and the light-receiving sensor may be incorporated in a common device or optical system.

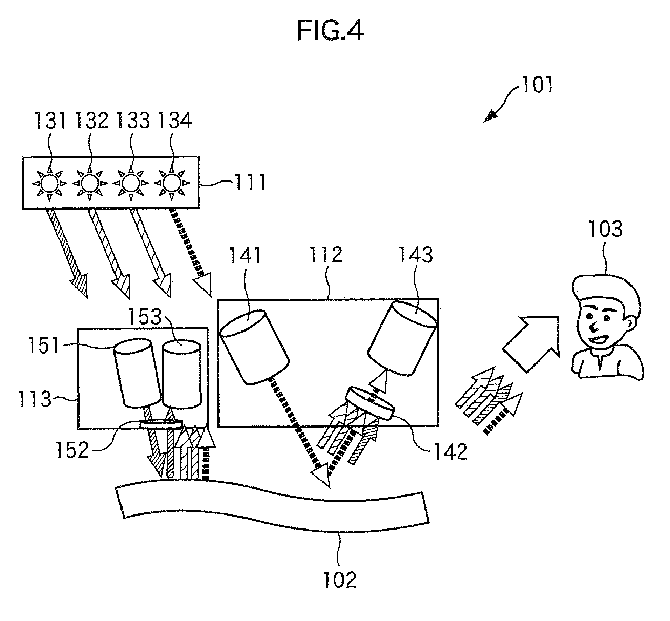

Next, the case in which the present invention is applied to an optical apparatus 101 using two types of measurement light having different wavelengths will be explained with reference to Figure 4.

An observation illumination device 111 of the optical apparatus 101 of Figure 4 is illumination for irradiating a measurement object 102 with observation light. The observation illumination device 111 is provided with a LED 131 which emits red single-color light having a predetermined center wavelength (for example, 613 nm), a LED 132 which emits green single-color light having a predetermined center wavelength (for example, 525 nm), a LED 133 which emits blue single-color light having a predetermined center wavelength (for example, 470 nm), and a LED 134 which emits red single-color light of a different center wavelength (for example, 630 nm) having the center wavelength in the vicinity of the light emission center wavelength of the LED 131.

A measurement unit 112 and a measurement unit 113 use the measurement light and carry out measurement of, for example, the shape or the focal length of the measurement object 102.

Specifically, the measurement unit 112 is composed to include: a measurement light source 141, which emits red single-color laser light having the same center wavelength as that of the LED 134 as measurement light; an optical filter 142, which allows transmission of only the light having the same wavelength as that of the light emitted from the measurement light source 141 and cuts off the light of the other wavelengths; and a light-receiving sensor 143, which detects the measurement light transmitted through the optical filter 142.

The measurement unit 113 is composed to include: a measurement light source 151, which emits red single-color laser light having the same center wavelength as that of the LED 131 as measurement light; an optical filter 152, which allows transmission of only the light having the same wavelength as the light emitted from the measurement light source 151 and cuts off the light having the other wavelengths; and a light-receiving sensor 153, which detects the measurement light transmitted through the optical filter 152.

When the measurement unit 112 is to carry out measurement of the measurement object 102, the observation illumination device 111 lights the LEDs 131 to 133 and turns off the LEDs 134 which emit the light having the same wavelength as that of the measurement light source 141. As a result, without using the elemental light emitted from the LED 134, the observation light perceived as white light by humans is generated by using the three types of elemental light of red, green, and blue emitted from the LEDs 131 to 133 and irradiates the measurement object 102. In such a light emission state, the integrated spectrum of the observation light exhibits a small light volume in the center wavelength range of the light emitted from the measurement light source 141. The measurement object 102 is irradiated with the measurement light emitted from the measurement light source 141.

Then, among the reflected light reflected by the measurement object 102 and enters the optical filter 142, only the measurement light from the measurement light source 141 transmits through the optical filter 142, and the observation light from the observation illumination device 111 is cut off. As a result, only the measurement light from the measurement light source 141 enters the light-receiving sensor 143 and is detected.

On the other hand, when the measurement unit 113 is to carry out measurement of the measurement object 102, the observation illumination device 111 lights the LEDs 132 to 134 and turns off the LED 131 which emits the light having the same wavelength as that of the measurement light source 151. As a result, without using the elemental light emitted from the LED 131, the observation light which is perceived as white light by humans is generated by using the three types of elemental light of green, blue, and red emitted from the LEDs 132 to 134 and irradiates the measurement object 102. In such a light emission state, the integrated spectrum of the observation light exhibits a small light volume in the center wavelength range of the light which is emitted from the measurement light source 151. The measurement object 102 is irradiated with the measurement light emitted from the measurement light source 151.

Then, among the reflected light reflected by the measurement object 102 and enters the optical filter 152, only the measurement light from the measurement light source 151 transmits through the optical filter 152, and the observation light from the observation illumination device 111 is cut off. As a result, only the measurement light from the measurement light source 151 enters the light-receiving sensor 153 and is detected.

In the above described manner, the dynamic ranges of the light-receiving sensor 143 and the light-receiving sensor 153 can be maximally utilized, the S/N ratio can be also improved, and measurement of the measurement object 102 can be more precisely carried out by using the measurement light having the two types of different wavelengths. Moreover, since the wavelengths of the LED 131 and the LED 134 are close to each other, a user 103 can be prevented from feeling the switching of the observation light between the case of the measurement by the measurement unit 112 and the case of the measurement by the measurement unit 113.

When the types of the wavelengths of the measurement light are to be further increased in the optical apparatus 101, for example, a light source which emits red single-color laser light having a wavelength different from the wavelengths of both the measurement light source 141 and the measurement light source 151 is added. When measurement is to be carried out by using the added light source, observation light can be generated by the combination of either the LEDs 131 to 133 or the LEDs 132 to 134.

The method shown in Figure 4 is effective in the case in which the elemental light and the colors (wavelengths) of the measurement light which can be used is limited to easily available colors in order to, for example, suppress cost. Particularly, when the wavelength of the measurement light is not required to be limited, a plurality of wavelengths can be selected as the wavelengths of the measurement light from the wavelengths at which the intensity of the observation light is equal to or less than a predetermined threshold value.

Embodiments of the present invention are not limited to the above described embodiments, and various modifications can be made within the range not deviating from the gist of the present invention. For example, the type of the light source used in the observation illumination device 12 is not limited only to LEDs, and white light may be formed in a pseudo manner by the laser light having mutually different light emission wavelength ranges. Based on the integrated spectrum of the observation illumination device 12, the wavelength range in which the light emission volume is small can be set as the wavelength range of the measurement light.

### [Reference Signs List]

1 MEASUREMENT APPARATUS, 11 MEASUREMENT UNIT, 12 OBSERVATION ILLUMINATION DEVICE, 31 MEASUREMENT LIGHT SOURCE, 39 OPTICAL FILTER, 41 IMAGE PICKUP ELEMENT, 51 TO 53 LEDs, 111 OBSERVATION ILLUMINATION DEVICE, 112 MEASUREMENT UNIT, 113 MEASUREMENT UNIT, 131 TO 134 LEDs, 141 MEASUREMENT LIGHT SOURCE, 142 OPTICAL FILTER, 143 LIGHT-RECEIVING SENSOR, 151 MEASUREMENT LIGHT SOURCE, 152 OPTICAL FILTER, 153 LIGHT-RECEIVING SENSOR

## Claims

1. A measurement apparatus for detecting measurement light, which irradiates a measurement object, by a light-receiving sensor and carrying out measurement of the measurement object, the measurement apparatus comprising:
a plurality of observation light sources for respectively emitting light having mutually different wavelength components and irradiating the measurement object with the respective light so as to generate observation light perceived as white light illuminating the measurement object, wherein an integrated spectrum obtained by integrating spectrum light emission characteristics of the light having the mutually different wavelength components includes, in a visible wavelength range, a weak wavelength range of a wavelength at which intensity of light is equal to or less than a predetermined threshold value; and
a measurement light source for emitting the measurement light serving as single-color light having the wavelength included in the weak wavelength range.

2. The measurement apparatus according to claim 1, further comprising
an optical filter provided between the measurement object and the light-receiving sensor, blocking light having the same wavelength range as the observation light, causing the light having the same wavelength as the measurement light to pass through the filter and enter the light-receiving sensor.

3. The measurement apparatus according to claim 1, comprising:
a first observation light source serving as the observation light source for emitting single-color light of a first wavelength range;
a second observation light source for emitting single-color light of a second wavelength range which is in the vicinity of the first wavelength range and different from the first wavelength range;
a first measurement light source serving as the measurement light source for emitting first measurement light having a center wavelength in the first wavelength range and serving as the measurement light; and
a second measurement light source serving as the measurement light source for emitting second measurement light having a center wavelength in the second wavelength range and serving as the measurement light; wherein,
when the first measurement light is used, the observation light is generated by using the second single-color light without using the first single-color light; and, when, the second measurement light is used, the observation light is generated by using the first single-color light without using the second single-color light.
